# FASCICULE DE BREVET EUROPEEN

(11) **EP 2 980 417 B1**
(45) Date de publication et mention de la délivrance du brevet: **11.01.2017**
(21) Numéro de dépôt: 15174703.7
(22) Date de dépôt: 30.06.2015
(51) Int. Cl.: F15B 13/043

(54) **SERVOVALVE À ENSEMBLE MOBILE DOUBLE**
SERVOVENTIL MIT DOPPELTEM BEWEGUNGSELEMENT
DUAL MOBILE ASSEMBLY SERVOVALVE

(30) Priorité: 31.07.2014 FR 1457473
(43) Date de publication de la demande: 03.02.2016
(73) Titulaire: Zodiac Hydraulics, 28200 Chateaudun (FR)
(72) Inventeur: Bertrand, Jean-Luc, 45000 Orleans (FR)
(74) Mandataire: Parzy, Benjamin Alain

(56) Documents cités:
- EP-A2- 0 260 065
- FR-A1- 2 963 393
- US-A- 3 460 436

## Description

### Domaine de l'invention

L'invention est relative à une servovalve hydraulique à déviation de jet.

### Etat de la technique

Une servovalve à déviation de jet classique comprend un étage de pilotage et un étage de puissance.

L'étage de puissance comprend généralement un organe de distribution de puissance mobile dans un logement du corps de la servovalve entre deux positions extrêmes pour mettre en communication un ou plusieurs ports de service avec un port d'alimentation de la servovalve en pression hydraulique et un port de retour.

Le déplacement de l'organe de distribution de puissance dans son logement permet de délivrer une pression ou un débit de sortie proportionnel au déplacement dudit organe de distribution de puissance.

L'étage de pilotage d'une telle servovalve comporte un moteur couple dont le rotor est lié à un injecteur hydraulique mobile faisant face à un récepteur hydraulique fixe. Généralement, le moteur couple de l'étage de pilotage agit sur des palettes magnétiques d'un ensemble mobile dont un élément élastiquement déformable est fonctionnellement relié à un conduit d'amenée de fluide muni en son extrémité de l'injecteur hydraulique. Les palettes magnétiques sont solidaires de l'élément élastiquement déformable de manière à provoquer une déformation de cet élément proportionnelle à la valeur de la consigne électrique. Cette déformation entraîne un déplacement de l'injecteur vis-à-vis du récepteur fixe et génère une pression de pilotage qui résulte de la différence des pressions transmises par des canaux forés aux extrémités du logement de l'organe de distribution de puissance. Cette pression de pilotage est exploitée pour déplacer finement l'organe de puissance.

Il existe classiquement trois types d'ensemble mobile d'un étage de pilotage d'une servovalve à déviation de jet:
- un premier type dans lequel l'élément élastiquement déformable est une barre soumise à la torsion ;
- un deuxième type dans lequel l'élément élastiquement déformable est un tube soumis à la flexion ;
- un troisième type dans lequel l'élément élastiquement déformable est un tube soumis à la torsion. Ce troisième type a fait l'objet d'une demande de brevet FR2963393 par le déposant.

Ces servovalves comprennent également un organe de rétroaction qui asservit la position de l'organe de distribution de puissance au rotor du moteur couple et engendre sur le moteur couple un couple qui vient se soustraire à l'action de commande. L'organe de rétroaction peut être de type mécanique, à l'aide d'une tige de rétroaction reliant le rotor de la servovalve à l'organe de distribution de puissance. L'organe de rétroaction peut également comprendre un capteur de position, de type LVDT (Linear Variable Differential Transformer), mesurant la position de l'organe de puissance et dont les instructions sont transmises à une unité de traitement pilotant la consigne électrique reçue par l'étage de pilotage.

Les sections de passage du conduit d'amenée de fluide hydraulique et de l'injecteur hydraulique sont dimensionnées de manière à permettre un écoulement laminaire du fluide et un débit suffisant pour déplacer rapidement l'organe de distribution de puissance tout en minimisant le débit prélevé pour le fonctionnement de la servovalve. En effet, un diamètre trop faible du conduit et/ou de l'injecteur amène un débit insuffisant en sortie d'injecteur et dégrade la réactivité de la servovalve. A l'inverse un diamètre important augmente la consommation permanente de la servovalve et donc la demande d'énergie au système hydraulique. Le dimensionnement des sections de passage de fluide se base généralement sur un comportement de fluide hydraulique correspondant notamment à des plages de températures, de pression et de viscosité définies en fonction des conditions de service des équipements. Cependant, il existe des situations d'utilisation dans lesquelles ces paramètres peuvent prendre des valeurs situées hors des plages de dimensionnement. Une situation particulièrement critique concerne le démarrage à froid. En effet, la viscosité des fluides hydrauliques variant avec la température, cette viscosité peut atteindre des valeurs incompatibles avec un fonctionnement de la servovalve, y compris dans un mode dégradé.

Pour répondre à ce problème, il a été envisagé des dispositifs de réchauffage de fluide hydraulique à l'aide de dispositifs de traçage électrique qui amènent le fluide hydraulique à une température permettant le fonctionnement de la servovalve. Cette solution complexifie et alourdit l'installation sur laquelle est montée la servovalve, ce qui est particulièrement préjudiciable dans des applications aéronautiques. De plus, il est nécessaire d'attendre que le fluide atteigne la température requise avant de pouvoir utiliser l'appareil ce qui pose des problèmes de disponibilité, comme par exemple dans des applications militaires ou civiles dans lesquelles les équipements doivent pouvoir être opérationnels dans un délai réduit ou dans des conditions climatiques extrêmes.

Il a également été envisagé d'améliorer la viscosité à basse température du fluide hydraulique, mais les fluides présentant un bon comportement à basse température ont une température maximale d'utilisation limitée, et vice-versa.

### OBJET DE L'INVENTION

Un but de l'invention est de réduire les opérations préalables à la mise en service d'une servovalve à basse température.

### RESUME DE L'INVENTION

A cet effet, on prévoit une servovalve hydraulique comprenant :
- un étage de puissance comportant un organe de distribution de puissance mobile entre deux positions extrêmes pour mettre en communication un ou des ports de service avec un port d'alimentation en fluide hydraulique et un port de retour ;
- un étage de pilotage pour piloter la position de l'organe de distribution de puissance, l'étage de pilotage comportant un moteur couple commandable pour actionner un organe d'éjection de fluide solidaire d'un élément élastiquement déformable et adapté à faire varier une pression de pilotage de l'organe de distribution de puissance. Selon l'invention, l'organe d'éjection de fluide comporte un premier et un deuxième injecteur de fluide alimentés par des moyens d'alimentation en fluide adaptés à alimenter soit un seul du premier et du deuxième injecteur à fluide, soit les deux injecteurs simultanément.

Selon un mode de réalisation particulier, le premier et le deuxième injecteur de la servovalve sont respectivement alimentés par une première et une deuxième conduite d'amenée de fluide ayant des sections de passage différentes et/ou dont les sections de passage des injecteurs sont différentes.

Selon les applications, l'élément élastiquement déformable est une barre de torsion, un tube de flexion ou un tube de torsion.

Idéalement, l'élément mobile comprend une tige de rétroaction destinée à coopérer avec l'organe de distribution de puissance de l'étage de puissance.

Préférentiellement, l'étage de puissance comprend un organe de distribution de puissance déplaçable dans un logement tubulaire et chaque extrémité du logement tubulaire comprend une chambre dans laquelle débouchent une première arrivée de fluide amenant le fluide éjecté par le premier injecteur à fluide et une deuxième arrivée de fluide amenant le fluide éjecté par le deuxième injecteur à fluide.

### BREVE DESCRIPTION DES DESSINS

Il sera fait référence aux figures annexées parmi lesquelles :
- la figure 1 est une représentation schématique d'ensemble d'un premier mode de réalisation d'une servovalve selon l'invention ;
- la figure 2 est une vue de détail schématique en perspective d'un ensemble mobile selon l'invention ;
- la figure 3 est une vue schématique d'un équipement comprenant une servovalve selon l'invention ;
- la figure 4 est une vue schématique en coupe verticale d'un deuxième mode de réalisation de la servovalve selon l'invention ;
- la figure 5 est une vue schématique en coupe verticale d'un troisième mode de réalisation de la servovalve selon l'invention ;
- la figure 6 est une vue schématique en coupe verticale d'un quatrième mode de réalisation de la servovalve selon l'invention.

### DESCRIPTION DETAILLEE DE L'INVENTION

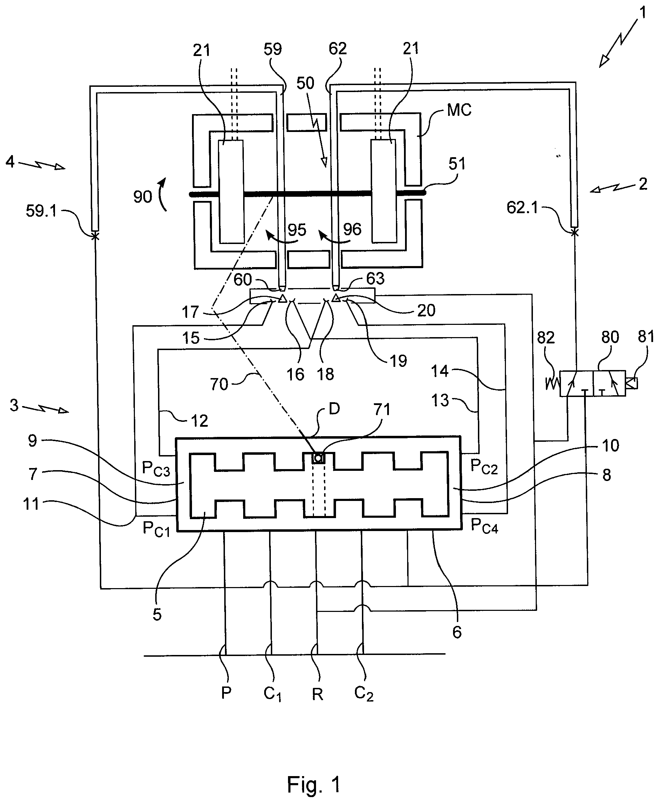

En référence à la figure 1, la servovalve selon l'invention, généralement désignée 1, comprend dans un corps 2 un étage de puissance 3 et un étage de pilotage 4. L'étage de puissance 3 comprend un organe de distribution de puissance 5 monté à coulissement dans un logement tubulaire 6 du corps 2. L'organe de distribution de puissance 5 est agencé, de manière connue, pour sélectivement mettre en communication des lumières du logement 6 reliées fluidiquement aux ports P d'alimentation en fluide hydraulique ainsi qu'aux ports de service C1, C2 et de retour R de la servovalve. Les extrémités de l'organe de distribution de puissance 5 définissent respectivement avec les extrémités 7 et 8 du logement tubulaire 6 une première chambre 9 et une deuxième chambre 10. Deux arrivées de fluide 11 et 12 débouchent dans la première chambre 9 du logement tubulaire 6 tandis que deux autres arrivées de fluide 13 et 14 débouchent dans la deuxième chambre 10 du logement tubulaire 6. Les arrivées de fluide débouchent ainsi dans des chambres séparées. Les arrivées de fluide 11 et 13 sont respectivement reliées au premier port de réception 15 et au deuxième port de réception 16 d'un premier récepteur à fluide 17 de l'étage de pilotage 4. Les arrivées de fluide 12 et 14 sont quant à elles respectivement reliées au premier port de réception 18 et au deuxième port de réception 19 d'un deuxième récepteur à fluide 20 de l'étage de pilotage 4.. L'organe de distribution de puissance est mobile entre une première et une deuxième position extrême correspondant respectivement à un volume minimal et un volume maximal de la première chambre 9.

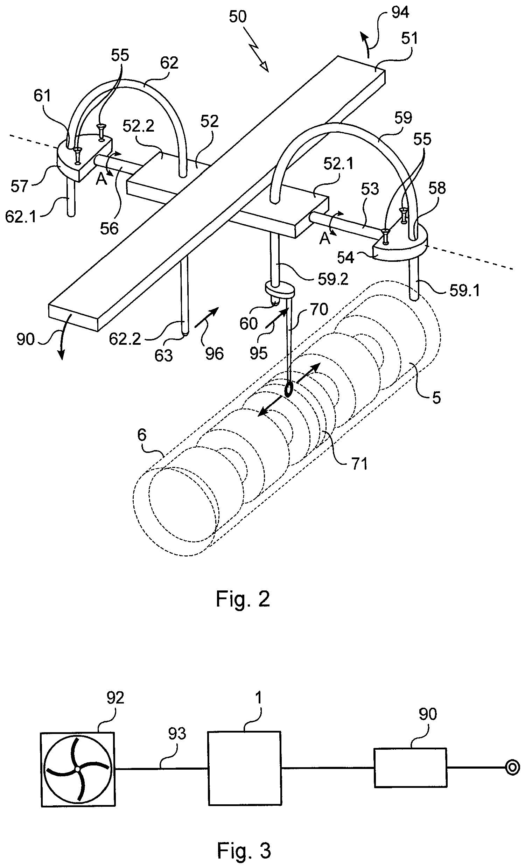

En référence aux figures 1 et 2, l'étage de pilotage 4 comprend un moteur couple MC dont les bobines 21 interagissent magnétiquement avec les extrémités d'une palette magnétique 51 rectangulaire d'un ensemble mobile 50 afin d'en commander la position en fonction d'une consigne électrique. L'ensemble mobile 50 comprend également un élément central 52 de forme sensiblement rectangulaire et dont la direction longitudinale s'étend sensiblement perpendiculairement à la palette magnétique 51. La première extrémité 52.1 de l'élément central 52 est reliée via une première barre de torsion 53 à un premier support 54 en forme de demi disque et pourvu de deux perçages destinés à accueillir des vis de fixation 55 du premier support 54 sur le corps 2 de la servovalve 1. La deuxième extrémité 52.2 de l'élément central 52 est reliée via une deuxième barre de torsion 56 à un deuxième support 57 en forme de demi disque et pourvu de deux perçages destinés à accueillir des vis de fixation 55 du deuxième support 57 sur le corps 2 de la servovalve 1. Le premier support 54 comprend un troisième perçage 58 au travers duquel s'étend une première conduite 59 d'un diamètre intérieur de l'ordre du millimètre (correspondant à une section de passage de 0.8 mm²) et qui réalise un arc de cercle à 180° pour ensuite s'étendre au travers de la première extrémité 52.1 de l'élément central 52. La conduite 59 est raccordée au support 54 et à la première extrémité 52.1 de l'élément central 52, par exemple par soudage. La première extrémité 59.1 de la portion de la première conduite 59 liée au support 54 est alimentée en fluide hydraulique à la pression d'alimentation via le logement 6 tandis que la deuxième extrémité 59.2 de la portion de la première conduite 59 reliée à l'élément central 52 est reliée à un premier injecteur à fluide 60 dont le diamètre est compris entre 2 et 4 dixièmes de millimètre et qui fait face au premier récepteur à fluide 17. La deuxième extrémité 59.2 du premier conduit 59 comprend également une tige de rétroaction 70 coopérant avec une gorge 71 de l'organe de distribution de puissance 5. De manière symétrique, le deuxième support 57 comprend un troisième perçage 61 au travers duquel s'étend une deuxième conduite 62 d'un diamètre compris entre deux et trois millimètres et qui réalise un arc de cercle à 180° pour ensuite s'étendre au travers de la deuxième extrémité 52.2 de l'élément central 52. La première extrémité 62.1 de la portion de la deuxième conduite 62 liée au support 57 et la deuxième extrémité 62.2 de la portion de la deuxième conduite 62 liée à l'élément central 52 sont respectivement raccordées au support 57 et à la deuxième extrémité 52.2 de l'élément central 52, par exemple par soudage. La première extrémité 62.1 de la deuxième conduite 62 est alimentée en fluide hydraulique à la pression d'alimentation via le logement 6. Un distributeur 80 hydraulique à tiroir est installé sur l'alimentation en fluide de la première extrémité 62.1 du deuxième conduit 62. La deuxième extrémité 62.2 est, quant à elle, pourvue d'un deuxième injecteur à fluide 63, dont le diamètre est de l'ordre du millimètre, faisant face au deuxième récepteur à fluide 20.

Le distributeur 80 est commandé électriquement à l'aide d'une bobine électrique 81 et est ramené en position par un ressort 82. Le distributeur 80 peut adopter deux états. Un premier état reliant l'alimentation en fluide de l'extrémité 62.1 du deuxième conduit 62 au logement 6 et permettant son alimentation en fluide à la pression d'alimentation, et un deuxième état (représenté en figure 1) dans lequel l'alimentation en fluide de l'extrémité 62.1 du deuxième conduit 62 est reliée au port de retour R de la servovalve.

On obtient ainsi une servovalve 1 à deux étages comprenant un étage de puissance 3 comportant un organe de distribution de puissance 5 mobile entre deux positions extrêmes pour mettre en communication les ports de service C1 et C2 avec un port d'alimentation P en fluide hydraulique et un port de retour R. La servovalve 1 comprend également un étage de pilotage 4 comportant un moteur couple MC commandable pour contrôler la position de l'ensemble mobile 50 dont un élément élastiquement déformable composé des barres 53 et 56 est solidaire des injecteurs à fluide hydraulique 60 et 63 via l'élément central 52. La modification de la position des injecteurs à fluide 60 et 63 vis-à-vis des récepteurs à fluide 17 et 20 fait varier les pressions dans les chambres 9 et 10 et résulte en une pression de pilotage de l'organe de distribution de puissance 5 qui déplace celui-ci dans le logement 6. Les injecteurs 60 et 63 à fluide peuvent fonctionner simultanément et l'alimentation du deuxième injecteur à fluide 63 peut être interrompue par application d'une consigne électrique à la bobine 81 commandant le changement d'état du distributeur 80 et permettant le fonctionnement du seul injecteur à fluide 60.

Une telle servovalve 1 est avantageusement mise en oeuvre pour commander un actionneur hydraulique 90 d'un équipement 91, tel qu'un aéronef. Dans le cas d'une mise en service de l'équipement 91 intégrant la servovalve 1 par très basse température, la viscosité du fluide hydraulique mis en circulation par la pompe 92 dans le réseau hydraulique 93 de l'équipement 91 est particulièrement élevée. Le distributeur 80 est alors placé dans sa première position et alimente en fluide hydraulique les premières extrémités 62.1 et 59.1 des conduite 62. Dans cette situation, les deux injecteurs à fluides 60 et 63 fonctionnent simultanément. Lorsqu'une consigne électrique est appliquée au moteur couple MC, le champ magnétique ainsi créé déplace la palette magnétique 51 et entraîne un déplacement du premier injecteur à fluide 60 et du deuxième injecteur 63 respectivement relativement aux injecteurs à fluide 17 et 20. A titre d'exemple on a représenté, sur la figure 2, un déplacement de la palette 51 dans le sens 94 entraînant alors des déplacements des injecteurs à fluide 60 et 63 respectivement dans un sens 95 et 96. Les déplacements dans les sens 95 et 96 respectivement des injecteurs à fluide 17 et 20 amènent une importante quantité de fluide hydraulique sur les premiers récepteurs à fluide 15 et 18. Les premières arrivées de fluide 11 et 12 respectives des premiers récepteurs à fluide 15 et 18 débouchent dans la première chambre 9 et y amènent le fluide hydraulique. La quantité de fluide hydraulique amenée dans la première chambre 9 augmente la pression dans celle-ci par rapport à la pression présente dans la chambre 10. Ce différentiel de pression déplace alors l'organe de distribution de puissance 5 de la chambre 9 vers la chambre 10 et découvre alors les lumières du logement 6 de manière à délivrer une pression vers les ports de service C1 et C2 proportionnelle à la consigne électrique appliquée au moteur couple MC. Alors qu'un apport de fluide hydraulique par un unique conduit 59 n'aurait pas permis la création d'un différentiel de pression suffisant pour déplacer l'organe de puissance 5 en raison de la forte viscosité du fluide hydraulique à basse température, les apports combinés de fluide hydraulique par les conduits 59 et 62 permettent, à basse température, d'utiliser la servovalve 1 pour la mise en service de l'équipement 90. Lorsque le fluide hydraulique atteint une température, et donc une viscosité, correspondant aux conditions de fonctionnement nominales du fluide hydraulique dans la servovalve 1, une consigne électrique est envoyée à la bobine 81 de manière à faire passer le tiroir hydraulique 80 dans sa deuxième position et interrompre l'alimentation en fluide du deuxième injecteur à fluide 63, et donc son fonctionnement.

On obtient ainsi une servovalve 1 permettant, pour un surpoids limité, correspondant sensiblement à la masse du deuxième conduit 62, une mise en service quasi immédiate d'une servovalve à basse température.

Les éléments identiques ou analogues à ceux précédemment décrits porteront une référence identique à ceux-ci dans la description qui suit des deuxièmes, troisièmes et quatrièmes modes de réalisation.

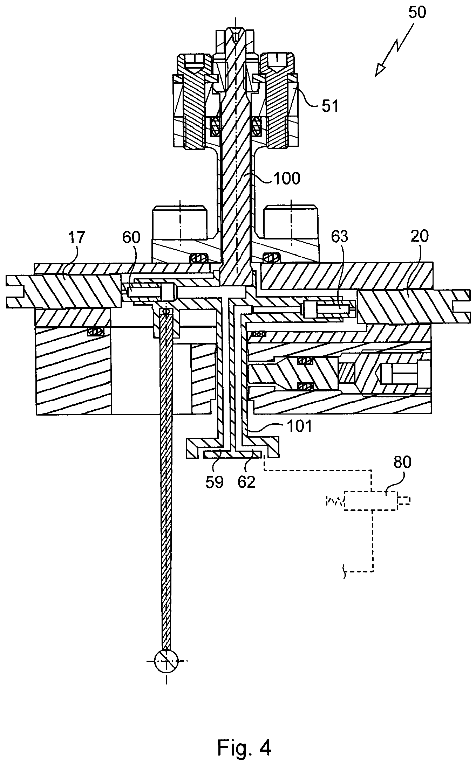

En référence à la figure 4, l'étage de pilotage 2 de la servovalve 50 comprend une palette magnétique 51 montée en une première extrémité d'un tube de torsion 100. La seconde extrémité 101 du tube de torsion 100 comprend une première conduite 59 et une deuxième conduite 62 d'alimentation en fluide respectivement des injecteurs hydrauliques 60 et 63. Les injecteurs à fluides 60 et 63 sont solidaires du tube de torsion 100 et font respectivement face à des récepteurs 17 et 20 dont les récepteurs à fluide 15, 16, 18 et 19 sont reliés aux chambres 9 et 10 du logement 6. En utilisation, une consigne électrique appliquée sur la palette magnétique 51 provoque une torsion du tube 100 autour de son axe. Cette torsion entraîne un mouvement des injecteurs 60 et 63 relativement aux récepteurs 17 et 20. L'amenée de fluide hydraulique via les conduits 11 à 14 connectés aux récepteurs à fluide 15 à 19 génère une pression de pilotage qui déplace l'organe de distribution de puissance 5 de manière à délivrer une pression de sortie aux ports C1 et C2 proportionnelle à la consigne électrique appliquée à la palette magnétique 51. Lorsque le fluide hydraulique atteint une température, et donc une viscosité, correspondant aux conditions de fonctionnement nominales du fluide hydraulique dans la servovalve 1, une consigne électrique est envoyée à la bobine 81 de manière à faire passer le tiroir hydraulique 80 dans sa deuxième position et interrompre l'alimentation en fluide du deuxième injecteur à fluide 63, et donc son fonctionnement.

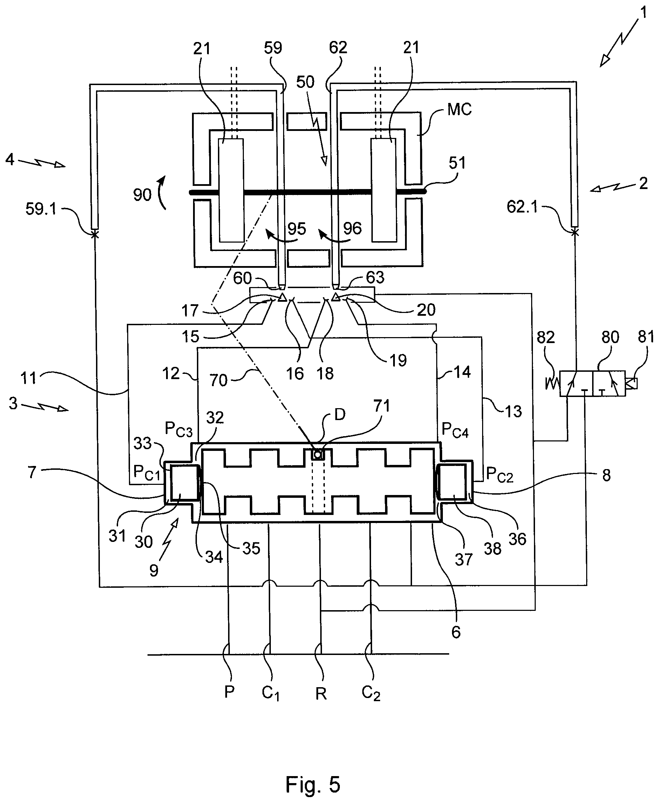

En référence à la figure 5, le troisième mode de réalisation de la servovalve hydraulique 50 est décrit. Selon ce mode de réalisation, la première chambre 9 comprend un cylindre 30 mobile dans le logement tubulaire 6 définissant une sous chambre de pilotage permanent 31 et une sous chambre de pilotage transitoire 32. La sous chambre de pilotage 31 est définie d'une part par l'extrémité 7 du logement tubulaire 6 et d'autre part par une première face 33 du cylindre 30. La deuxième face 34 du cylindre 30 opposée à la première face 33 est bombée et est en contact avec une extrémité 35 de l'organe de distribution de puissance 5. La sous chambre de pilotage transitoire 32 est définie d'une part par la deuxième face 34 du cylindre 30 et d'autre part par l'extrémité 35 de l'organe de puissance 5. L'arrivée de fluide 11 débouche dans la sous chambre de pilotage permanent 31 tandis que l'arrivée de fluide 12 débouche dans la sous chambre de pilotage transitoire 32. La deuxième chambre 10 du logement tubulaire 6 comprend, de manière homologue, une sous chambre de pilotage permanent 36 séparée d'une sous chambre de pilotage transitoire 37 par un cylindre 38 identique au cylindre 30. L'arrivée de fluide 13 débouche dans la sous chambre de pilotage permanent 36 tandis que l'arrivée de fluide 14 débouche dans la sous chambre de pilotage transitoire 37.

Le fonctionnement de la servovalve demeure identique à celui précédemment décrit. Cette configuration permet une sommation des efforts exercés par la mise en pression de chacune des sous chambres.

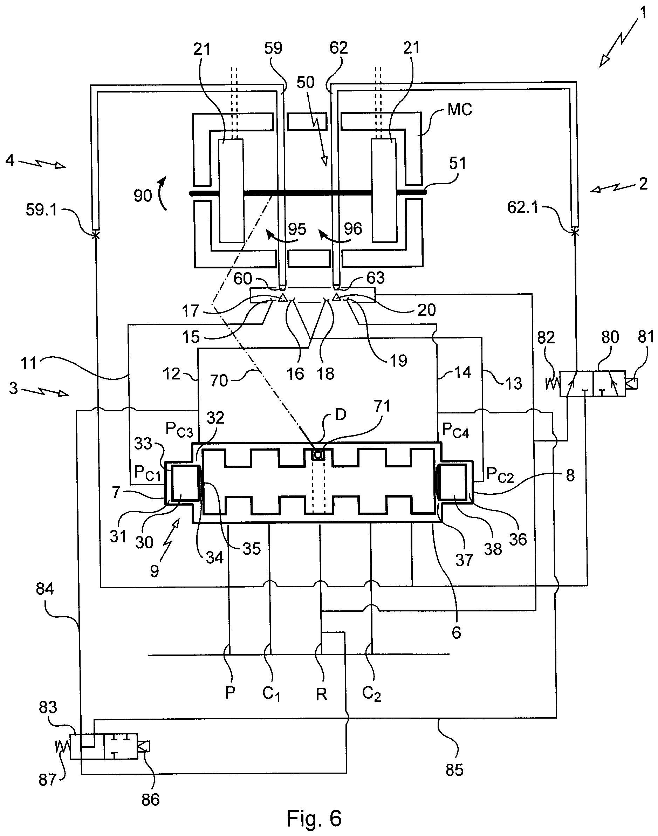

Le quatrième mode de réalisation décrit en référence à la figure 6 est une amélioration du troisième mode de réalisation de la figure 5. Dans ce mode de réalisation, un distributeur 83 hydraulique à tiroir reçoit des dérivations 84 et 85 issues respectivement des arrivées de fluide 12 et 14 alimentant les chambres de pilotage transitoires 32 et 37. Le distributeur 83 est commandé électriquement à l'aide d'une bobine électrique 86 et est ramené en position par un ressort 87. Le distributeur 83 peut adopter deux états. Un premier état dans lequel les dérivations 84 et 85 sont bouchées, et un deuxième état (représenté en figure 6) dans lequel ces dérivations 84 et 85 sont reliées au port de retour R de la servovalve. Le premier état du distributeur 83 est adopté lorsque le distributeur 80 est dans son premier état. Dans cette configuration, le deuxième injecteur à fluide 63 est alimenté et les dérivations 84 et 85 sont bouchées. Lorsque le distributeur 80 passe dans son deuxième état et coupe l'alimentation en fluide du deuxième injecteur à fluide 63, le distributeur 83 passe lui également dans son deuxième état. Dans cette configuration, les deux chambres de pilotage transitoires 32 et 37 sont mises en équipression. Ceci diminue les efforts parasites sur l'organe mobile de puissance 5 issus de la recirculation du fluide entre les chambres de pilotage transitoires 32 et 37. Préférentiellement, les bobines électriques 81 et 86 de commande des tiroirs hydrauliques 80 et 83 peuvent être couplées.

Bien entendu, l'invention n'est pas limitée aux modes de réalisation décrit mais englobe toute variante entrant dans le champ de l'invention telle que définie par les revendications.

En particulier,
- bien qu'ici l'organe de distribution de puissance soit monté à coulissement dans un logement tubulaire du corps de la servovalve, l'invention s'applique également à d'autres types de montage de l'organe de puissance dans le corps de la servovalve comme par exemple un montage dans une chemise rapportée dans le corps de la servovalve ;
- bien qu'ici, une tige de rétroaction soit fonctionnellement liée à l'organe de distribution de puissance, l'invention s'applique à d'autres types de moyens de rétroaction comme par exemple une rétroaction comprenant une LVDT mesurant la position de l'organe de puissance et dont les informations sont exploitées pour moduler la consigne électrique appliquée à l'étage de pilotage;
- bien qu'ici l'ensemble mobile comprenne deux éléments élastiques sous la forme de deux barres de torsion, l'invention s'applique également à d'autres types d'élément élastiquement déformable tel que, par exemple, une unique barre de torsion, un tube de torsion ou un tube de flexion ;

- bien qu'ici les sections de passage de la première et de la deuxième conduite d'amenée de fluide soient différentes, l'invention s'applique également à des première et deuxième conduites d'amenée de fluide de section de passage identique ;
- bien qu'ici les sections de passage du premier et deuxième injecteur à fluide soient différentes, l'invention s'applique également à des premier et deuxième injecteurs à fluide de section de passage identique ;
- bien qu'ici la servovalve comprenne deux ports de service, l'invention s'applique également à une servovalve ayant un nombre de différents de ports de service, comme par exemple un unique port de service ou plus de deux ;
- bien qu'ici l'étage de pilotage soit compris dans le corps de la servovalve, celui-ci peut être fixé en partie ou totalement sur le corps de la servovalve et non contenu dedans ;
- bien qu'ici les supports des éléments centraux permettant la fixation de l'ensemble mobile sur le corps de la servovalve soient en forme de demi disque, l'invention s'applique également à d'autres moyens de fixation de l'ensemble mobile au corps de la servovalve tels que des supports de forme carrée ou quelconque, ou une fixation sur des pièces intermédiaires rapportées sur le corps de la servovalve ;
- bien qu'ici le distributeur soit commandé électriquement à l'aide d'une bobine électrique, l'invention s'applique également à d'autres types d'actionneur de commande du distributeur ou d'autre moyens de changement d'état du distributeur comme par exemple un changement d'état induit par la pression ou à l'aide d'une commande mécanique par effet thermique ;
- bien qu'ici les diamètres des premières et deuxièmes conduites soient respectivement de un millimètre et de deux à trois millimètres, l'invention s'applique également à d'autres valeurs de diamètres de conduite, voire des conduites de diamètre égaux, il en est de même pour les diamètres des injecteurs ;
- bien qu'ici les faces des cylindres en contact avec les extrémités de l'organe de distribution de puissance soient bombées, l'invention s'applique également à d'autres géométries de faces de contact comme par exemple des faces planes, concaves ou quelconques.

## Revendications

1. Servovalve hydraulique (1) comprenant :
- un étage de puissance (3) comportant un organe de distribution de puissance mobile entre deux positions extrêmes pour mettre en communication un ou des ports de service (C1, C2) avec un port d'alimentation (P) en fluide hydraulique et un port de retour (R) ;
- un étage de pilotage (4) pour piloter la position de l'organe de distribution de puissance, l'étage de pilotage (4) comportant un moteur couple (MC) commandable pour actionner un organe d'éjection de fluide solidaire d'un élément élastiquement déformable et adapté à faire varier une pression de pilotage de l'organe de distribution de puissance ;
**caractérisé en ce que** l'organe d'éjection de fluide comporte un premier et un deuxième injecteur de fluide (60, 63) alimentés par des moyens d'alimentation en fluide adaptés à alimenter soit un seul du premier et du deuxième injecteur à fluide (60, 63), soit les deux injecteurs simultanément.

2. Servovalve (1) selon la revendication 1 dans laquelle le premier et le deuxième injecteur de fluide (60, 63) sont respectivement alimentés par une première et une deuxième conduite d'amenée de fluide (59, 62) ayant des sections de passage de fluide différentes.

3. Servovalve (1) selon la revendication 1 dans laquelle le premier et le deuxième injecteur à fluide hydraulique (60, 63) ont des sections de passage de fluide différentes.

4. Servovalve (1) selon la revendication 1 dans laquelle l'élément élastiquement déformable (53, 56) est une barre de torsion.

5. Servovalve (1) selon la revendication 1 dans laquelle l'élément élastiquement déformable est un tube de flexion.

6. Servovalve (1) selon la revendication 1 dans laquelle l'élément élastiquement déformable est un tube de torsion.

7. Servovalve (1) selon la revendication 1, dans laquelle l'élément mobile (50) comprend une tige de rétroaction (70) destinée à coopérer avec l'organe de distribution de puissance (5) de l'étage de puissance (3).

8. Servovalve (1) selon la revendication 1 dans laquelle, l'étage de puissance (3) comprenant un organe de distribution de puissance (5) déplaçable dans un logement tubulaire (6), chaque extrémité (7, 8) du logement tubulaire (6) comprend une chambre (9, 10) dans laquelle débouchent une première arrivée de fluide hydraulique (12, 14) amenant le fluide hydraulique éjecté par le premier injecteur à fluide (60) et une deuxième arrivée de fluide hydraulique (11, 13) amenant le fluide hydraulique éjecté par le deuxième injecteur à fluide (63).

## Patentansprüche

1. Hydraulisches Servoventil (1), umfassend:
- eine Leistungsstufe (3), die ein Leistungsverteilungsorgan umfasst, das zwischen zwei Endpositionen beweglich ist, um einen Serviceanschluss oder Serviceanschlüsse (C1, C2) mit einem Hydraulikfluidversorgungsanschluss (P) und einem Rücklaufanschluss (R) in Verbindung zu bringen;
- eine Steuerstufe (4) zum Steuern der Position des Leistungsverteilungsorgans, wobei die Steuerstufe (4) einen Drehmomentmotor (MC) umfasst, der steuerbar ist, um ein Fluidausstoßorgan zu betätigen, das fest mit einem elastisch verformbaren Element verbunden ist, das dazu geeignet ist, einen Steuerdruck des Leistungsverteilungsorgans zu variieren;
**dadurch gekennzeichnet, dass** das Fluidausstoßorgan einen ersten und einen zweiten Fluidinjektor (60, 63) umfasst, die von Fluidversorgungsmitteln gespeist werden, die dazu geeignet sind, entweder einen einzelnen aus dem ersten und dem zweiten Fluidinjektor (60, 63) oder die beiden Fluidinjektoren gleichzeitig zu versorgen.

2. Servoventil (1) nach Anspruch 1, bei dem der erste und der zweite Fluidinjektor (60, 63) mittels einer ersten bzw. einer zweiten Fluidzuführleitung (59, 62) versorgt werden, die unterschiedliche Fluiddurchflussquerschnitte haben.

3. Servoventil (1) nach Anspruch 1, bei dem der erste und der zweite Hydraulikfluidinjektor (60, 63) unterschiedliche Fluiddurchflussquerschnitte haben.

4. Servoventil (1) nach Anspruch 1, bei dem das elastisch verformbare Element (53, 56) ein Torsionsstab ist.

5. Servoventil (1) nach Anspruch 1, bei dem das elastisch verformbare Element ein Biegerohr ist.

6. Servoventil (1) nach Anspruch 1, bei dem das elastisch verformbare Element ein Torsionsrohr ist.

7. Servoventil (1) nach Anspruch 1, bei dem das bewegliche Element (50) eine Rückkopplungsstange (70) umfasst, die dazu bestimmt ist, mit dem Leistungsverteilungsorgan (5) der Leistungsstufe (3) zusammenzuwirken.

8. Servoventil (1) nach Anspruch 1, bei dem, da die Leistungsstufe (3) ein in einer rohrförmigen Aufnahme (6) verschiebbares Leistungsverteilungsorgan (5) umfasst, jedes Ende (7, 8) der rohrförmigen Aufnahme (6) eine Kammer (9, 10) umfasst, in die eine erste Hydraulikfluidzuführung (12, 14) mündet, die das von dem ersten Fluidinjektor (60) ausgestoßene Hydraulikfluid zuführt, sowie eine zweite Hydraulikfluidzuführung (11, 13), die das von dem zweiten Fluidinjektor (63) ausgestoßene Hydraulikfluid zuführt.

## Claims

1. Hydraulic servo valve (1) comprising:
- a power stage (3) comprising a power distribution member able to move between two extreme positions in order to place one or more service ports (C1, C2) in communication with a feed port (P) supplying hydraulic fluid and with a return port (R);
- a control stage (4) for controlling the position of the power distribution member, the control stage (4) comprising a torque motor (MC) that can be operated in such a way as to actuate a fluid ejection member secured to an elastically deformable element and designed to cause a control pressure of the power distribution member to vary;
**characterized in that** the fluid ejection member comprises a first and a second fluid injector (60, 63) which are fed by fluid feeding means able to feed either just one of the first and second fluid injectors (60, 63) or both injectors simultaneously.

2. Servo valve (1) according to Claim 1, in which the first and second fluid injectors (60, 63) are respectively fed by a first and a second fluid supply duct (59, 62) having different fluid bore sections.

3. Servo valve (1) according to Claim 1, in which the first and second hydraulic fluid injectors (60, 63) have different fluid bore sections.

4. Servo valve (1) according to Claim 1, in which the elastically deformable element (53, 56) is a torsion bar.

5. Servo valve (1) according to Claim 1, in which the elastically deformable element is a bending tube.

6. Servo valve (1) according to Claim 1, in which the elastically deformable element is a torsion tube.

7. Servo valve (1) according to Claim 1, in which the mobile element (50) comprises a feedback rod (70) designed to collaborate with the power distribution member (5) of the power stage (3).

8. Servo valve (1) according to Claim 1, in which with the power stage (3) comprising a power distribution member (5) capable of moving in a tubular housing (6), each end (7, 8) of the tubular housing (6) comprises a chamber (9, 10) into which a first hydraulic fluid inlet (12, 14) supplying the hydraulic fluid ejected by the first fluid injector (60) and a second hydraulic fluid inlet (11, 13) supplying the hydraulic fluid ejected by the second fluid injector (63) open.
